(19) Europäisches Patentamt / European Patent Office / Office européen des brevets

(11) **EP 2 711 770 B1**

(12) **EUROPEAN PATENT SPECIFICATION**

(45) Date of publication and mention
of the grant of the patent:
**24.02.2016  Bulletin 2016/08**

(51) Int Cl.:
***G02F 1/167*** *(2006.01)*

(21) Application number: **13005031.3**

(22) Date of filing: **18.10.2006**

(54) **Electro-optic displays**

Elektrooptische Anzeigen

Écrans électro-optiques

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.10.2005  US 596743 P**
**21.10.2005  US 596799 P**

(43) Date of publication of application:
**26.03.2014  Bulletin 2014/13**

(62) Document number(s) of the earlier application(s) in accordance with Art. 76 EPC:
**06839457.6 / 1 938 299**

(73) Proprietor: **E Ink Corporation**
**Billerica, MA 01821-4165 (US)**

(72) Inventors:
  • **Whitesides, Thomas, H.**
    **Victoria BC, V8S 3C5 (CA)**
  • **Paolini, Jr., Richard, J.**
    **Framingham, MA 01702 (US)**
  • **Walls, Michael, D.**
    **Charlottesville, VA 22901 (US)**
  • **Sohn, Seungman**
    **Seoul Soedaemun (KR)**
  • **Mccreary, Michael, D.**
    **Acton, MA 01720 (US)**
  • **Danner, Guy, M.**
    **Somerville, MA 02143 (US)**
  • **Honeyman, Charles, Howie**
    **Toronto ON, M8V 2N8 (CA)**

(74) Representative: **Cole, David John**
**46 Kirkhill Gardens**
**West Greenlees Estate**
**Cambuslang**
**Glasgow G72 8EZ (GB)**

(56) References cited:
**JP-A- H0 980 400       US-A1- 2004 155 857**
**US-A1- 2005 007 653    US-A1- 2005 105 159**
**US-A1- 2005 168 801**

**Description**

The present invention relates to color electro-optic displays. This invention relates primarily to electro-optic displays containing an electro-optic medium which is a solid (such displays may hereinafter for convenience be referred to as "solid electro-optic displays"), in the sense that the electro-optic medium has solid external surfaces, although the medium may, and often does, have internal liquid- or gas-filled spaces, and to methods for assembling displays using such an electro-optic medium. Thus, the term "solid electro-optic displays" includes encapsulated electrophoretic displays, encapsulated liquid crystal displays, and other types of displays discussed below.

This application is related to U.S. Patents Nos. 6,864,875; 6,982,178; and 7,110,164, and to U.S. Patent Application Publication No. 2005/0146774, to which the reader is referred for background information.

The term "electro-optic", as applied to a material or a display, is used herein in its conventional meaning in the imaging art to refer to a material having first and second display states differing in at least one optical property, the material being changed from its first to its second display state by application of an electric field to the material. Although the optical property is typically color perceptible to the human eye, it may be another optical property, such as optical transmission, reflectance, luminescence or, in the case of displays intended for machine reading, pseudo-color in the sense of a change in reflectance of electromagnetic wavelengths outside the visible range.

The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element. It is shown in published U.S. Patent Application No. 2002/0180687 that some particle-based electrophoretic displays capable of gray scale are stable not only in their extreme black and white states but also in their intermediate gray states, and the same is true of some other types of electro-optic displays. This type of display is properly called "multi-stable" rather than bistable, although for convenience the term "bistable" may be used herein to cover both bistable and multi-stable displays.

Several types of electro-optic displays are known. One type of electro-optic display is a rotating bichromal member type as described, for example, in U.S. Patents Nos. 5,808,783; 5,777,782; 5,760,761; 6,054,071 6,055,091; 6,097,531; 6,128,124; 6,137,467; and 6,147,791 (although this type of display is often referred to as a "rotating bichromal ball" display, the term "rotating bichromal member" is preferred as more accurate since in some of the patents mentioned above the rotating members are not spherical).Such a display uses a large number of small bodies (typically spherical or cylindrical) which have two or more sections with differing optical characteristics, and an internal dipole. These bodies are suspended within liquid-filled vacuoles within a matrix, the vacuoles being filled with liquid so that the bodies are free to rotate. The appearance of the display is changed to applying an electric field thereto, thus rotating the bodies to various positions and varying which of the sections of the bodies is seen through a viewing surface. This type of electro-optic medium is typically bistable.

Another type of electro-optic display uses an electrochromic medium, for example an electrochromic medium in the form of a nanochromic film comprising an electrode formed at least in part from a semi-conducting metal oxide and a plurality of dye molecules capable of reversible color change attached to the electrode; see, for example O'Regan, B., et al., Nature 1991, 353, 737; and Wood, D., Information Display, 18(3), 24 (March 2002). See also Bach, U., et al., Adv. Mater., 2002, 14(11), 845. Nanochromic films of this type are also described, for example, in U.S. Patents Nos. 6,301,038; 6,870.657; and 6,950,220. This type of medium is also typically bistable.

Another type of electro-optic display, which has been the subject of intense research and development for a number of years, is the particle-based electrophoretic display, in which a plurality of charged particles move through a suspending fluid under the influence of an electric field. Electrophoretic displays can have attributes of good brightness and contrast, wide viewing angles, state bistability, and low power consumption when compared with liquid crystal displays. Nevertheless, problems with the long-term image quality of these displays have prevented their widespread usage. For example, particles that make up electrophoretic displays tend to settle, resulting in inadequate service-life for these displays.

As noted above, electrophoretic media require the presence of a fluid. In most prior art electrophoretic media, this fluid is a liquid, but electrophoretic media can be produced using gaseous fluids; see, for example, Kitamura, T., et al., "Electrical toner movement for electronic paper-like display", IDW Japan, 2001, Paper HCS1-1, and Yamaguchi, Y., et al., "Toner display using insulative particles charged triboelectrically", IDW Japan, 2001, Paper AMD4-4). See also U.S. Patent Publication No. 2005/0001810; European Patent Applications 1,462,847; 1,482,354; 1,484,635; 1,500,971; 1,501,194; 1,536,271; 1,542,067; 1,577,702; 1,577,703; and 1,598,694; and International Applications WO 2004/090626; WO 2004/079442; and WO 2004/001498. Such gas-based electrophoretic media appear to be susceptible to the same types of problems due to particle settling as liquid-based electrophoretic media, when the media are used in an orientation which permits such settling, for example in a sign where the medium is disposed in a vertical plane. Indeed, particle settling appears to be a more serious problem in gas-based electrophoretic media than in liquid-based ones, since the lower viscosity of gaseous suspending fluids as compared with liquid ones allows more rapid settling of the electrophoretic particles.

Numerous patents and applications assigned to or in the names of the Massachusetts Institute of Technology (MIT) and E Ink Corporation have recently been published describing encapsulated electrophoretic media. Such encapsulated media comprise numerous small capsules, each of which itself comprises an internal phase containing electrophoretically-mobile particles suspended in a liquid suspending medium, and a capsule wall surrounding the internal phase. Typically, the capsules are themselves held within a polymeric binder to form a coherent layer positioned between two electrodes. Encapsulated media of this type are described, for example, in U.S. Patents Nos. 5,930,026; 5,961,804; 6,017,584; 6,067,185; 6,118,426; 6,120,588; 6,120,839; 6,124,851; 6,130,773; 6,130,774; 6,172,798; 6,177,921; 6,232,950; 6,249,271; 6,252,564; 6,262,706; 6,262,833; 6,300,932; 6,312,304; 6,312,971; 6,323,989; 6,327,072; 6,376,828; 6,377,387; 6,392,785; 6,392,786; 6,413,790; 6,422,687; 6,445,374; 6,445,489; 6,459,418; 6,473,072; 6,480,182; 6,498,114; 6,504,524; 6,506,438; 6,512,354; 6,515,649; 6,518,949; 6,521,489; 6,531,997; 6,535,197; 6,538,801; 6,545,291; 6,580,545; 6,639,578; 6,652,075; 6,657,772; 6,664,944; 6,680,725; 6,683,333; 6,704,133; 6,710,540; 6,721,083; 6,724,519; 6,727,881; 6,738,050; 6,750,473; 6,753,999; 6,816,147; 6,819,471; 6,822,782; 6,825,068; 6,825,829; 6,825,970; 6,831,769; 6,839,158; 6,842,167; 6,842,279; 6,842,657; 6,864,875; 6,865,010; 6,866,760; 6,870,661; 6,900,851; 6,922,276; 6,950,200; 6,958,848; 6,967,640; 6,982,178; 6,987,603; 6,995,550; 7,002,728; 7,012,600; 7,012,735; 7,023,430; 7,030,412; 7,030,854; 7,034,783; 7,038,655; 7,061,663; 7,071,913; 7,075,502; 7,075,703; 7,079,305; 7,106,296; 7,109,968; 7,110,163; 7,110,164; 7,116,318; 7,116,466; 7,119,759; and 7,119,772; and U.S. Patent Applications Publication Nos. 2002/0060321; 2002/0090980; 2002/0180687; 2003/0011560; 2003/0102858; 2003/0151702; 2003/0222315; 2004/0014265; 2004/0075634; 2004/0094422; 2004/0105036; 2004/0112750; 2004/0119681; 2004/0136048; 2004/0155857; 2004/0180476; 2004/0190114; 2004/0196215; 2004/0226820; 2004/0239614; 2004/0257635; 2004/0263947; 2005/0000813; 2005/0007336; 2005/0012980; 2005/0017944; 2005/0018273; 2005/0024353; 2005/0062714; 2005/0067656; 2005/0078099; 2005/0099672; 2005/0122284; 2005/0122306; 2005/0122563; 2005/0122565; 2005/0134554; 2005/0146774; 2005/0151709; 2005/0152018; 2005/0152022; 2005/0156340; 2005/0168799; 2005/0179642; 2005/0190137; 2005/0212747; 2005/0213191; 2005/0219184; 2005/0253777; 2005/0270261; 2005/0280626; 2006/0007527; 2006/0024437; 2006/0038772; 2006/0139308; 2006/0139310; 2006/0139311; 2006/0176267; 2006/0181492; 2006/0181504; 2006/0194619; 2006/0197736; 2006/0197737; 2006/0197738; 2006/0198014; 2006/0202949; and 2006/0209388; and International Applications Publication Nos. WO 00/38000; WO 00/36560; WO 00/67110; and WO 01/07961; and European Patents Nos. 1,099,207 B1; and 1,145,072 B1.

Many of the aforementioned patents and applications recognize that the walls surrounding the discrete microcapsules in an encapsulated electrophoretic medium could be replaced by a continuous phase, thus producing a so-called polymer-dispersed electrophoretic display, in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, the aforementioned U.S. Patent No. 6,866,760. Accordingly, for purposes of the present application, such polymer-dispersed electrophoretic media are regarded as sub-species of encapsulated electrophoretic media.

Although electrophoretic media are often opaque (since, for example, in many electrophoretic media, the particles substantially block transmission of visible light through the display) and operate in a reflective mode, many electrophoretic displays can be made to operate in a so-called "shutter mode" in which one display state is substantially opaque and one is light-transmissive. See, for example, the aforementioned U.S. Patents Nos. 6,130,774 and 6,172,798, and U.S. Patents Nos. 5,872,552; 6,144,361; 6,271,823; 6,225,971; and 6,184,856. Dielectrophoretic displays, which are similar to electrophoretic displays but rely upon variations in electric field strength, can operate in a similar mode; see U.S. Patent No. 4,418,346.

An encapsulated electrophoretic display typically does not suffer from the clustering and settling failure mode of traditional electrophoretic devices and provides further advantages, such as the ability to print or coat the display on a wide variety of flexible and rigid substrates. (Use of the word "printing" is intended to include all forms of printing and coating, including, but without limitation: pre-metered coatings such as patch die coating, slot or extrusion coating, slide or cascade coating, curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet printing processes; and other similar techniques.) Thus, the resulting display can be flexible. Further, because the display medium can be printed (using a variety of methods), the display itself can be made inexpensively.

A related type of electrophoretic display is a so-called "microcell electrophoretic display". In a microcell electrophoretic display, the charged particles and the suspending fluid are not encapsulated within microcapsules but instead are retained within a plurality of cavities formed within a carrier medium, typically a polymeric film. See, for example, International Application Publication No. WO 02/01281, and published US Application No. 2002/0075556, both assigned to Sipix Imaging, Inc.

Other types of electro-optic media may also be used in the displays of the present invention.

An electro-optic display normally comprises a layer of electro-optic material and at least two other layers disposed on opposed sides of the electro-optic material, one of these two layers being an electrode layer. In most such displays both the layers are electrode layers, and one or both of the electrode layers are patterned to define the pixels of the display. For example, one electrode layer may be patterned into elongate row electrodes and the other into elongate column electrodes running at right angles to the row electrodes, the pixels being defined by the intersections of the row and column electrodes. Alternatively, and more commonly, one electrode layer has the form of a single continuous electrode and the other electrode layer is patterned into a matrix of pixel electrodes, each of which defines one pixel of the display. In another type of electro-optic display, which is intended for use with a stylus, print head or similar movable electrode separate from the display, only one of the layers adjacent the electro-optic layer comprises an electrode, the layer on the opposed side of the electro-optic layer typically being a protective layer intended to prevent the movable electrode damaging the electro-optic layer.

The manufacture of a three-layer electro-optic display normally involves at least one lamination operation. For example, in several of the aforementioned MIT and E Ink patents and applications, there is described a process for manufacturing an encapsulated electrophoretic display in which an encapsulated electrophoretic medium comprising capsules in a binder is coated on to a flexible substrate comprising indium-tin-oxide (ITO) or a similar conductive coating (which acts as an one electrode of the final display) on a plastic film, the capsules/binder coating being dried to form a coherent layer of the electrophoretic medium firmly adhered to the substrate. Separately, a backplane, containing an array of pixel electrodes and an appropriate arrangement of conductors to connect the pixel electrodes to drive circuitry, is prepared. To form the final display, the substrate having the capsule/binder layer thereon is laminated to the backplane using a lamination adhesive. (A very similar process can be used to prepare an electrophoretic display usable with a stylus or similar movable electrode by replacing the backplane with a simple protective layer, such as a plastic film, over which the stylus or other movable electrode can slide.) In one preferred form of such a process, the backplane is itself flexible and is prepared by printing the pixel electrodes and conductors on a plastic film or other flexible substrate. The obvious lamination technique for mass production of displays by this process is roll lamination using a lamination adhesive. Similar manufacturing techniques can be used with other types of electro-optic displays. For example, a microcell electrophoretic medium or a rotating bichromal member medium may be laminated to a backplane in substantially the same manner as an encapsulated electrophoretic medium.

As discussed in the aforementioned U.S. Patent 6,982,178, many of the components used in solid electro-optic displays, and the methods used to manufacture such displays, are derived from technology used in liquid crystal displays (LCD's), which are of course also electro-optic displays, though using a liquid rather than a solid medium. For example, solid electro-optic displays may make use of an active matrix backplane comprising an array of transistors or diodes and a corresponding array of pixel electrodes, and a "continuous" front electrode (in the sense of an electrode which extends over multiple pixels and typically the whole display) on a transparent substrate, these components being essentially the same as in LCD's. However, the methods used for assembling LCD's cannot be used with solid electro-optic displays. LCD's are normally assembled by forming the backplane and front electrode on separate glass substrates, then adhesively securing these components together leaving a small aperture between them, placing the resultant assembly under vacuum, and immersing the assembly in a bath of the liquid crystal, so that the liquid crystal flows through the aperture between the backplane and the front electrode. Finally, with the liquid crystal in place, the aperture is sealed to provide the final display.

This LCD assembly process cannot readily be transferred to solid electro-optic displays. Because the electro-optic material is solid, it must be present between the backplane and the front electrode before these two integers are secured to each other. Furthermore, in contrast to a liquid crystal material, which is simply placed between the front electrode and the backplane without being attached to either, a solid electro-optic medium normally needs to be secured to both; in most cases the solid electro-optic medium is formed on the front electrode, since this is generally easier than forming the medium on the circuitry-containing backplane, and the front electrode/electro-optic medium combination is then laminated to the backplane, typically by covering the entire surface of the electro-optic medium with an adhesive and laminating under heat, pressure and possibly vacuum.

As discussed in the aforementioned U.S. Patent No. 6,312,304, the manufacture of solid electro-optic displays also presents problems in that the optical components (the electro-optic medium) and the electronic components (in the backplane) have differing performance criteria. For example, it is desirable for the optical components to optimize reflectivity, contrast ratio and response time, while it is desirable for the electronic components to optimize conductivity, voltage-current relationship, and capacitance, or to possess memory, logic, or other higher-order electronic device capabilities. Therefore, a process for manufacturing an optical component may not be ideal for manufacturing an electronic component, and *vice versa*. For example, a process for manufacturing an electronic component can involve processing under high temperatures. The processing temperature can be in the range from about 300°C. to about 600°C. Subjecting many optical components to such high temperatures, however, can be harmful to the optical components by degrading the electro-optic medium chemically or by causing mechanical damage.

This patent describes a method of manufacturing an electro-optic display comprising providing a modulating layer including a first substrate and an electro-optic material provided adjacent the first substrate, the modulating layer being capable of changing a visual state upon application of an electric field; providing a pixel layer comprising a second substrate, a plurality of pixel electrodes provided on a front surface of the second substrate and a plurality of contact pads provided on a rear surface of the second substrate, each pixel electrode being connected to a contact pad through a via extending through the second substrate; providing a circuit layer including a third substrate and at least one circuit element; and laminating the modulating layer, the pixel layer, and the circuit layer to form the electro-optic display.

Electro-optic displays are often costly; for example, the cost of the color LCD found in a portable computer is typically a substantial fraction of the entire cost of the computer. As the use of electro-optic displays spreads to devices, such as cellular telephones and personal digital assistants (PDA's), much less costly than portable computers, there is great pressure to reduce the costs of such displays. The ability to form layers of some solid electro-optic media by printing techniques on flexible substrates, as discussed above, opens up the possibility of reducing the cost of electro-optic components of displays by using mass production techniques such as roll-to-roll coating using commercial equipment used for the production of coated papers, polymeric films and similar media. However, such equipment is costly and the areas of electro-optic media presently sold may be insufficient to justify dedicated equipment, so that it may typically be necessary to transport the coated medium from a commercial coating plant to the plant used for final assembly of electro-optic displays without damage to the relatively fragile layer of electro-optic medium.

Also, most prior art methods for final lamination of electro-optic displays are essentially batch methods in which the electro-optic medium, the lamination adhesive and the backplane are only brought together immediately prior to final assembly, and it is desirable to provide methods better adapted for mass production.

The aforementioned U.S. Patent No. 6,982,178 describes a method of assembling a solid electro-optic display (including a particle-based electrophoretic display) which is well adapted for mass production. Essentially, this patent describes a so-called "front plane laminate" ("FPL") which comprises, in order, a light-transmissive electrically-conductive layer; a layer of a solid electro-optic medium in electrical contact with the electrically-conductive layer; an adhesive layer; and a release sheet. Typically, the light-transmissive electrically-conductive layer will be carried on a light-transmissive substrate, which is preferably flexible, in the sense that the substrate can be manually wrapped around a drum (say) 10 inches (254 mm) in diameter without permanent deformation. The term "light-transmissive" is used in this patent and herein to mean that the layer thus designated transmits sufficient light to enable an observer, looking through that layer, to observe the change in display states of the electro-optic medium, which will be normally be viewed through the electrically-conductive layer and adjacent substrate (if present). The substrate will be typically be a polymeric film, and will normally have a thickness in the range of about 1 to about 25 mil (25 to 634 $\mu$m), preferably about 2 to about 10 mil (51 to 254 $\mu$m). The electrically-conductive layer is conveniently a thin metal or metal oxide layer of, for example, aluminum or ITO, or may be a conductive polymer. Poly(ethylene terephthalate) (PET) films coated with aluminum or ITO are available commercially, for example as "aluminized Mylar" ("Mylar" is a Registered Trade Mark) from E.I. du Pont de Nemours & Company, Wilmington DE, and such commercial materials may be used with good results in the front plane laminate.

Assembly of an electro-optic display using such a front plane laminate may be effected by removing the release sheet from the front plane laminate and contacting the adhesive layer with the backplane under conditions effective to cause the adhesive layer to adhere to the backplane, thereby securing the adhesive layer, layer of electro-optic medium and electrically-conductive layer to the backplane. This process is well-adapted to mass production since the front plane laminate may be mass produced, typically using roll-to-roll coating techniques, and then cut into pieces of any size needed for use with specific backplanes.

The aforementioned U.S. Patent No. 6,982,178 also describes a method for testing the electro-optic medium in a front plane laminate prior to incorporation of the front plane laminate into a display. In this testing method, the release sheet is provided with an electrically conductive layer, and a voltage sufficient to change the optical state of the electro-optic medium is applied between this electrically conductive layer and the electrically conductive layer on the opposed side of the electro-optic medium. Observation of the electro-optic medium will then reveal any faults in the medium, thus avoiding laminating faulty electro-optic medium into a display, with the resultant cost of scrapping the entire display, not merely the faulty front plane laminate.

The aforementioned U.S. Patent No. 6,982,178 also describes a second method for testing the electro-optic medium in a front plane laminate by placing an electrostatic charge on the release sheet, thus forming an image on the electro-optic medium. This image is then observed in the same way as before to detect any faults in the electro-optic medium.

The aforementioned 2004/0155857 describes a so-called "double release film" which is essentially a simplified version of the front plane laminate of the aforementioned U.S. Patent No. 6,982,178. One form of the double release sheet comprises a layer of a solid electro-optic medium sandwiched between two adhesive layers, one or both of the adhesive layers being covered by a release sheet. Another form of the double release sheet comprises a layer of a solid electro-optic medium sandwiched between two release sheets. Both forms of the double release film are intended for use in a process generally similar to the process for assembling an electro-optic display from a front plane laminate already described, but involving two separate laminations; typically, in a first lamination the double release sheet is laminated to a front electrode to form a front sub-assembly, and then in a second lamination the front sub-assembly is laminated to a backplane to form the final display.

US 2005/0168801 describes an electro-optic display comprising a backplane, a layer of electro-optic material and a protective layer capable of absorbing ultra-violet radiation and disposed on the opposed side of the layer of electro-optic material from the backplane, the display beng provided with an edge seal. The protective layer extends beyond the layer of electro-optic material, thus leaving a peripheral gap between the protective layer and the backplane. To form the edge seal an uncured edge sealing material curable by radiation transmitted by the protective layer is placed in the gap and cured by transmitting radiation through the protective layer.

US 2005/0105159 describes an encapsulated electrophoretic display produced by laminating an electrophoretic medium, comprising a plurality of discrete droplets in a polymeric binder, each droplet comprising a plurality of electrophoretic particles dispersed in a suspending fluid, to a backplane having at least one electrode at a temperature such that the polymeric binder flows and secures the electrophoretic medium to the backplane.

US 2005/0007653 describes an electro-optic display comprising first and second substrates, and an adhesive layer and a layer of electro-optic material disposed between these substrates, the adhesive layer comprising a mixture of a polymeric adhesive material and an additive selected from a salt, a polyelectrolyte, a polymer electrolyte, a solid electrolyte, a conductive metal powder, a ferrofluid, a non-reactive solvent, a conductive organic compound, and combinations thereof. The additive enables the volume resistivity of the adhesive layer to be controlled. In an encapsulated electrophoretic medium comprising capsules in a polymeric binder, the volume resistivity of the binder can be controlled in a similar manner.

JP H09 80400A describes a liquid crystal display element having an electrode and an orientation film after liquid crystal orientation processing on at least one transparent substrate. This display further comprises hermetically holding spacers, liquid crystal, and sealing resin between plural transparent substrates, and both sides of the liquid crystal element are covered by installing an ultraviolet-ray cutting filter or the base film or adhesive layer of a polarizing plate provided with an ultraviolet-ray absorbing function up to the sealing resin so that the sealed liquid crystal is covered, or the end part of the polarizing plate, etc., is covered with a metallic frame, a support plate, and a buffer material as a member.

Electro-optic displays manufactured using the aforementioned front plane laminates or double release films have a layer of lamination adhesive between the electro-optic layer itself and the backplane, and the presence of this lamination adhesive layer affects the electro-optic characteristics of the displays. In particular, the electrical conductivity of the lamination adhesive layer affects both the low temperature performance and the resolution of the display. The low temperature performance of the display can (it has been found empirically) be improved by increasing the conductivity of the lamination adhesive layer, for example by doping the layer with tetrabutylammonium hexafluorophosphate or other materials as described in the aforementioned U.S. Patent No. 7,012,735 and Publication No. 2005/0122565. However, increasing the conductivity of the lamination adhesive layer in this manner tends to increase pixel blooming (a phenomenon whereby the area of the electro-optic layer which changes optical state in response to change of voltage at a pixel electrode is larger than the pixel electrode itself), and this blooming tends to reduce the resolution of the display. Hence, this type of display apparently intrinsically requires a compromise between low temperature performance and display resolution, and in practice it is usually the low temperature performance which is sacrificed.

This variation of low temperature performance and display resolution with lamination adhesive conductivity may be understood in terms of a stacked resistor model, whereby the electro-optic layer and the lamination adhesive layer are modeled as two resistors connected in series between the display electrodes. As the conductivity of the lamination adhesive is increased, more of the voltage applied between the electrodes is dropped across the electro-optic layer. When the conductivity of the lamination adhesive layer is more than about 10 times that of the electro-optic layer, essentially the full value of the applied voltage is used to switch the electro-optic layer, so further increases in lamination adhesive conductivity do not improve electro-optic performance. However, the lamination adhesive conductivity cannot be made too high, since then the lamination adhesive cannot maintain lateral differences in potential, with the result that resolution is lost, with at least part of the spatial information in the backplane destroyed by the lamination adhesive shorting between adjacent electrodes.

At least when the electro-optic medium is an encapsulated electrophoretic medium, for all known useful lamination adhesives, the temperature dependence of the conductivity of the lamination adhesive is greater than that of the electro-optic layer. The conductivity of both layers decreases with temperature, but that of the lamination adhesive decreases more rapidly. If the lamination adhesive were formulated so that it was only just capable of providing good electro-optic performance at room temperature, as the temperature was reduced the lamination adhesive would rapidly become less conductive than the electro-optic layer. Under these conditions, the applied voltage is divided such that very little potential drop occurs across the electro-optic layer; instead, most of the potential drop occurs across the lamination adhesive layer, and hence does not contribute to switching of the electro-optic layer.

Hence, there is a need for an electro-optic display with improved low temperature performance without compromising the resolution of the display, and the present invention seeks to provide such an electro-optic display and components and methods for use in the manufacture thereof.

The present invention also assists in the production of color electro-optic displays. Most types of electro-optic media have only a limited number of optical states, for example a dark (black) state, a light (white) state and, in some cases, one or more intermediate gray states. Accordingly, to construct a full color display using such media, it is common practice to place an electro-optic medium adjacent a color filter array having, for example, multiple red, green and blue areas, and to provide a driving arrangement for the electro-optic medium which permits independent control of the medium adjacent each red, green or blue area. Certain applications of color filter arrays with electrophoretic displays are described in the aforementioned U.S. Patent No. 6,864,875. The aforementioned 2003/0011560 describes ways for modifying the optical properties of electrophoretic displays by incorporating an optical biasing element in any one of several components of the display.

The present invention seeks to provide improvements in color electro-optic displays and in processes for the production of such displays.

Accordingly, in one aspect this invention provides an electro-optic display according to appended independent claim 1.

The display of the invention is characterized in that an adhesive layer comprising at least two sections having differing colors (206R, 206G, 206B) is disposed between the layer of solid electro-optic medium (104) and the front light-transmissive electrically-conductive electrode layer (108).

In the electro-optic display of the present invention, the electro-optic layer may be in direct contact with a backplane. Alternatively, an auxiliary adhesive layer may be interposed between the backplane and the electro-optic layer, this auxiliary adhesive layer having a thickness not greater than 10 $\mu$m and/or not greater than one half of the thickness of the (main) adhesive layer on the opposed side of the electro-optic layer.

The adhesive layer comprising the colored sections provides a convenient and flexible color filter array. To provide a full color display, the main adhesive layer should have sections having at least three different colors, for example yellow, cyan and magenta, or red, green and blue, or red, green, blue and clear sections. As discussed in more detail below, the main adhesive layer is desirably colored using at least one pigment; this pigment may have an average particle size in the range of 5 to 50 nm. The main adhesive layer may comprise other additives, such as an ultra-violet absorber and/or a light-scattering or light-diffusing material.

The electro-optic display of the present invention may comprise both a light-transmissive protective layer and a light-transmissive electrically-conductive layer, the electrically-conductive layer being disposed between the protective layer and the main adhesive layer. The electro-optic display may use of any of the types of solid electro-optic media described above. Thus, the present display may comprise an electrochromic or rotating bichromal member medium, or an electrophoretic medium having a plurality of electrically charged particles disposed in a fluid and capable of moving through the fluid on application of an electric field to the electro-optic medium. If an electrophoretic medium is used, the electrically charged particles and the fluid may be encapsulated within a plurality of capsules or cells, or may be present as a plurality of discrete droplets held within a polymeric continuous phase. The fluid may be liquid or gaseous.

Figure 1 is a schematic section through an electro-optic display, the adhesive layer of which can be modified to produce a display of the present invention.

Figure 2 is a schematic section through a first electro-optic display of the present invention in which the adhesive layer is modified to provide a color filter array.

Figure 3 is a schematic section through a second electro-optic display of the present invention which is similar to the first display shown in Figure 2 but has an auxiliary adhesive layer between the electro-optic layer and the backplane.

Figure 4 is a bar graph showing the dynamic ranges measured in Example 2 below.

Figure 5 is a photograph of the displays used in the resolution tests carried out in Example 3 below.

As already indicated, the present invention can alleviate, or even eliminate, the compromise between resolution and low temperature performance hitherto experienced in electro-optic displays by inverting the order of the electro-optic layer and the lamination adhesive layer in the stack forming the final display, so that the high resolution part of the display (for example the backplane, especially a thin film transistor (TFT) backplane) is in direct contact with the electro-optic layer, or is separated therefrom only by an auxiliary adhesive layer having only a small thickness. With a display of this structure, the display resolution is essentially independent of the lamination adhesive conductivity, so that a lamination adhesive sufficiently conductive to have good low temperature performance can be used without compromising display resolution.

The main adhesive layer which is present between the electro-optic layer and the front electrode and, if provided, the front protective layer in the display of the present invention provides a convenient color filter array.

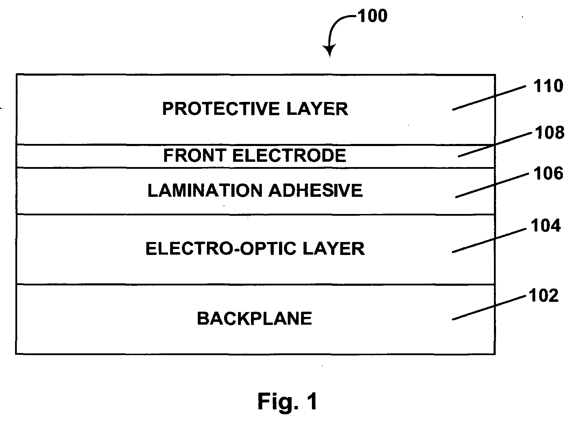

Figure 1 of the accompanying drawings is a highly schematic cross-section through a display helpful to understand the present invention. This display (generally any of the types discussed above, is in direct contact with the backplane 102; alternatively a thin (typically less than 10 μm, or less than half the thickness of the main layer of lamination adhesive described below) auxiliary layer of lamination adhesive (not shown) may be provided between the backplane 102 and the electro-optic layer 104. On the opposed side of the electro-optic layer 104 from the backplane 102 is disposed a main lamination adhesive layer 106, which can be chosen to give good low temperature performance, and may, for example, be a highly doped polyurethane adhesive. The last two layers of the display 100 are a front light-transmissive electrically-conductive electrode layer 108 and a light-transmissive protective layer 110; as discussed in the aforementioned U.S. Patents Nos. 6,982,178 and 7,110,164, and Publication No. 2004/0155857, the layers 108 and 110 are conveniently supplied using commercially available polymer films coated with very thin conductive layers, for example poly(ethylene terephthalate) (PET) films coated with indium tin oxide (ITO) or aluminum.

As indicated above, only one of the layers 108 and 110 need be present in the display or inverted front plane laminate.

At least in theory, if the electrode layer 108 is sufficiently mechanically robust to survive normal handling, the protective layer 110 can be omitted; in practice, however, light-transmissive electrodes are normally so thin that some form of protective layer is required. To provide the maximum voltage drop across the electro-optic layer 104 and hence the fastest switching speed, the protective layer should of course be disposed on the opposed side of the electrode layer from the electro-optic layer. In certain types of displays, for example those intended for use with a stylus or an external print head, the electrode layer 108 may be omitted.

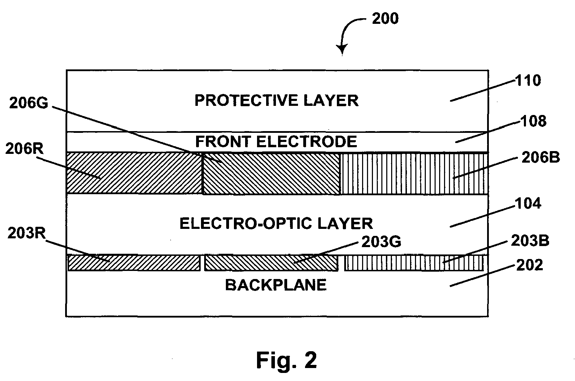

Figure 2 of the accompanying drawings illustrates a first display (generally designated 200) of the present invention, this display being generally similar to that of Figure 1 but being intended to display full color images. The display 200 comprises a backplane 202, which again can be of any conventional type. The backplane 202 is illustrated as comprising three pixel electrodes 203R, 203G and 203B. An electro-optic layer 104 identical to that shown in Figure 1, is in direct contact with the backplane 202. On the opposed side of the electro-optic layer 104 from the backplane 202 is disposed a main lamination adhesive layer, which is colored to form red, green and blue strips 206R, 206G and 206B respectively, these strips being aligned with the corresponding pixel electrodes 203R, 203G and 203B respectively; as is well known to those skilled in display technology, such alignment of the various colored strips with the pixel electrodes is necessary to ensure that colors can be written on the displays independently of one another, as required for accurate color reproduction. Thus the lamination adhesive layer also serves as a color filter array. The last two layers of the display are a front light-transmissive electrically-conductive electrode layer 108 and a light-transmissive protective layer 110, identical to those shown in Figure 1.

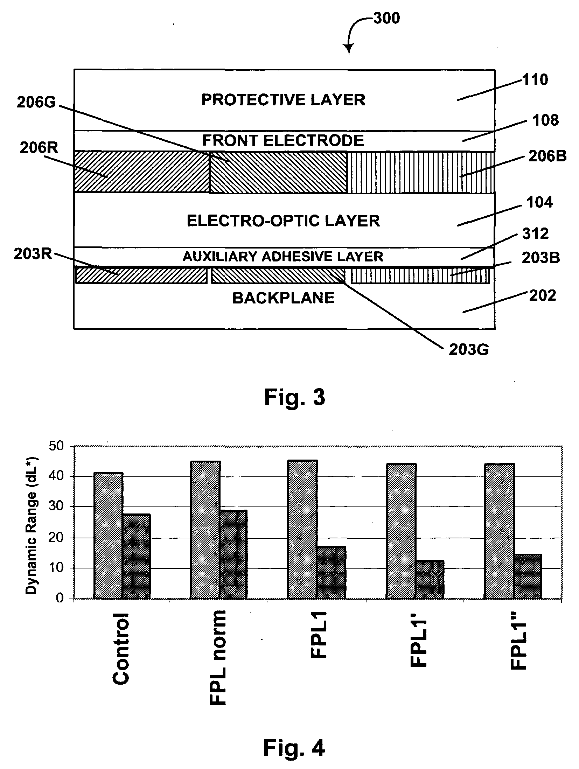

Figure 3 of the accompanying drawings shows a schematic section through a second display (generally designated 300) of the present invention which is generally similar to the display 200 shown in Figure 2 but in which a thin auxiliary adhesive layer 312 is disposed between the backplane 202 and the electro-optic layer 104. This auxiliary adhesive layer 312 is not colored; since most electro-optic media are opaque, the auxiliary adhesive layer 312 is not visible to an observer viewing the display 300 through the protective layer 110 and hence the auxiliary adhesive layer 312 normally cannot function as a color filter array. However, if for example the electro-optic layer 104 were intended to operate in shutter mode and the backplane 202 made light-transmissive so that the display 300 could be viewed in transmission, the auxiliary adhesive layer could be used as a color filter array.

Displays having the structures shown in Figures 1 to 3, and similar structures, can be manufactured in a number of ways. One approach to manufacturing such displays is to coat the electro-optic layer directly on to the backplane, where the electro-optic layer is of a type (for example, an encapsulated electrophoretic layer) which permits such coating. In most cases, this approach is not preferred since in commercial practice it requires individual processing of a large number of discrete, high value components, i.e., the individual backplanes, and this is awkward to carry out, since coating is more easily and more economically effected on a roll-to-roll basis, or at least on large flat substrates, where bar coating or hopper coating can be used, than on a large number of small separate backplanes.

In most cases, it is more convenient to coat the electro-optic layer on to a release sheet (i.e., a disposable sheet covered with a release layer). The resultant electro-optic medium/release sheet subassembly may then be laminated to a layer of lamination adhesive, coated either on to a second release sheet or on to a conductive, transparent electrode or a transparent protective layer, for example the aforementioned PET/ITO film. If the layer of lamination adhesive is an electrode or protective layer, the resulting structure is an inverted front plane laminate of the invention, so-called because it is essentially identical to the front plane laminate described in the aforementioned U.S. Patent No. 6,982,178, but with the order of the electro-optic and lamination adhesive layers inverted.

Such an inverted FPL is then used to form a final display by removing the release sheet adjacent the electro-optic layer, and laminating the remaining layers to a backplane. If the backplane is sufficiently smooth, and close attention is paid to the lamination conditions used, good, void-free lamination should be achievable, and the resulting display will show both good low temperature performance *and* high resolution. If void formation (i.e., areas where the electro-optic medium fails to adhere to the backplane) is found to be a problem, the release sheet adjacent the electro-optic layer can be removed from the inverted FPL and the remaining layers laminated to a thin layer of lamination adhesive previously coated on to a separate release sheet, thus forming a modified inverted FPL containing a auxiliary layer of lamination adhesive. After removal of the release sheet covering the auxiliary adhesive layer, the modified inverted FPL can be laminated to a backplane in the same manner as previously described, with improved adhesion to the backplane. Because the surface of the electro-optic layer exposed by removal of the release sheet will be very smooth (since the electro-optic layer was coated on a smooth support), a very thin auxiliary layer (in some cases as little as 1 $\mu$m or less) of lamination adhesive will suffice in most cases. This small thickness of adhesive will not be sufficient to affect either the electro-optic performance or the resolution of the display. In fact, any thickness of the auxiliary lamination adhesive layer that is less than that of the main lamination adhesive layer should give some improvement in performance. The conductivity of the auxiliary lamination adhesive layer can be varied if desired. The thicker this auxiliary layer is, the less conductive it can be, but if it is very thin (about 1 to 10 $\mu$m) it can be substantially more conductive than the main lamination adhesive layer without compromising the performance improvements provided by the present invention.

For certain applications, it may be advantageous to have a completely symmetrical structure, with an equally thick layer of lamination adhesive on either side of the electro-optic layer. This structure should have an effectively identical symmetrical electrical response, which might be expected to reduce or eliminate certain kinds of electro-optical artifacts. Such a display structure may be produced using a symmetrical double release film as described in the aforementioned 2004/0155857.

Alternatively, the electro-optic layer/release sheet subassembly previously described may be laminated to a layer of lamination adhesive coated on a second release sheet, thereby providing a structure (in effect, a modified double release film) comprising, in order, a first release sheet, an electro-optic layer, a lamination adhesive layer and a second release sheet. It has been shown to be possible to remove either release sheet from this modified double release film as a matter of choice. The modified double release film is effectively the equivalent of a freestanding electro-optic layer, which can be used to construct devices in several ways as described in the aforementioned U.S. Patent No. 7,110,164.

This invention may be especially useful in flexible color displays. Although considerable progress has been made in recent years in the production of flexible backplanes, including flexible thin film transistor (TFT) backplanes, substantial difficulties still remain in the areas of producing flexible color filter arrays (CFA's), aligning the pixel electrodes with the CFA elements during assembly of the displays, and maintaining this alignment when the display is flexed during use.

More specifically, one significant area of challenge in producing flexible color displays is in creating the CFA itself. The use of flexible, transparent substrates usually requires low process temperatures, which can be a problem when a CFA is produced using conventional photoresists. Lack of dimensional stability during processing makes alignment and registration over large areas difficult, and substrate non-uniformity adds to these problems.

Using a colored lamination adhesive layer as a CFA in accordance with the present invention provides several advantages. When dyes are used to provide the colors in the CFA, the dyes can be incorporated into the lamination adhesive polymer, which may be a water-borne polymer latex or a solvent-borne polymer used as a lamination adhesive. A dye of appropriate solubility must be chosen for the lamination adhesive that is to be used. Pigments may also be used to color the lamination adhesive. A water- or oil-dispersible pigment should be chosen appropriate for the lamination adhesive to be used. Pigments have the advantage of not making a major contribution to the dielectric or conductivity properties of the lamination adhesive, and they are not mobile in the lamination adhesive, whereas some dyes are mobile.

It is desirable that the colored lamination adhesive layer be thin (typically 10-50 $\mu$m) to reduce the voltage drop across the lamination adhesive layer and hence the driving voltage needed by the display. In such a thin lamination adhesive layer, it may be difficult to obtain sufficient extinction using a dye, because of limited solubility of the dye in water or a solvent. Hence, it may in many cases by preferable to use very finely divided pigments (particle size typically 5-50 nm) to allow a thin lamination adhesive layer to have high extinction yet remain light-transmissive.

As already mentioned, during the manufacture of a color display of the present invention, the lamination adhesive can be applied directly to the exposed surface of an electro-optic layer previously coated on a support, or the lamination adhesive can be applied to a separate substrate (which can be a release sheet or an electrode) and the resultant subassembly laminated to the electro-optic layer. This offers a low-cost way of creating an inverted front plane laminate comprising an integral CFA. Using such an FPL with an integral CFA expands the range of materials available for the front substrate, which can now use essentially any light-transmissive conductive layer or protective layer (formed from glass, plastic or other materials), and does not require the ability to be colored to form a CFA. Use of an inverted FPL with an integral CFA also expands the available range of backplane materials. Furthermore, because the CFA is constructed within the lamination adhesive layer, it is inherently flexible, and having the CFA intimately laminated to the electro-optic layer reduces misalignment issues that may occur when the display is flexed in use.

A single-color form of the display of the present invention can be created using an unpatterned colored lamination adhesive and lamination and assembly strategies as set out above.

A variety of methods can be used to apply, coat and/or color the lamination adhesive to form a CFA therein; the method chosen may vary with the size of the individual colored elements of the CFA. For example, the lamination adhesive may be deposited by screen printing; a colored polymer latex can be formed having the proper rheology and wetting characteristics to allow it to be printed by silk screen type methods. Alternatively, the lamination adhesive may be deposited by offset printing; a colored polymer latex can be formed having the proper rheology and wetting characteristics to allow it to be offset printed. Since offset printing is normally effected on webs (as, for example, in newspaper production), offset printing should allow the creation, at low cost, of sheets of lamination adhesive with an integral CFA ready for lamination to an electro-optic layer. Micro-contact printing may also be used; a colored polymer latex can be formed having the proper rheology and wetting characteristics to allow the fluid to be micro-contact printed.

A lamination adhesive layer with integral CFA may also be formed by ink jet or bubble jet printing of a color lamination adhesive. Most ink jet and bubble jet printers apply aqueous colored fluid to a printing substrate, using small droplets (typically about 10 $\mu$m in diameter) of the colored fluid. As discussed in several of the aforementioned E Ink and MIT patents and applications, polyurethane latices are often used as lamination adhesives in electro-optic displays, and the particles in such a latex at typically of the order of 100 nm in diameter, and hence very small relative to ink jet droplets. Thus, such latices are entirely compatible with ink jet and bubble jet printing. Pigment particles of the order of 10 nm in diameter can also readily be carried in ink jet or bubble jet droplets if properly suspended, while dyes and solvated polymers can easily be carried in such droplets. Finally, it should be noted that ink jet and bubble jet printing are low temperature processes, and thus pose a low risk of dimensional stability problems when used to effect patterning on plastic substrates.

A lamination adhesive layer with integral CFA may also be formed by ink jet or bubble jet printing of a dye on to a preformed layer of a lamination adhesive. Depending on the type of dye used, it may be possible for the dye to be printed on and/or diffuse into the lamination adhesive layer. The effect that the ink jet fluid has on the electrical properties of the lamination adhesive and its lamination characteristics should be taken into consideration.

A lamination adhesive layer with integral CFA may also be formed by a resist process. If the lamination adhesive is curable (cross-linkable) in a local area, a difference in solubility to common solvents can be created to allow patterning. For example, polyurethane-polyacrylate latices are known which can be cured with ultraviolet or visible radiation. Such materials can be cured with a laser, or via a photomask or other process to form a rubbery material that it not easily dissolved. Unexposed areas of the polymer can then be washed away, and the operation repeated to form the various colored elements of the CFA sequentially. Depending on the characteristics of the lamination adhesive, the flatness of the electro-optic layer, and the degree of curing, this patterning could be done on a release sheet to form the CFA as a separate subassembly before lamination of the CFA to the electro-optic layer. Alternatively, the patterning could effected directly on the electro-optic layer if the process conditions required are compatible with the electro-optic layer. If it is possible to create sufficiently high temperatures in a local area without damage to other components of the display, thermal curing could be used in place of radiation curing.

The patterning need not be limited to a CFA sub-pixel array. The lamination adhesive could be patterned as if it were a color overlay graphic (for example, via screen printing) and laminated directly to the optical layer.

Additives other than coloring materials can usefully be incorporated into the lamination adhesive layer used in the display of the present invention. For example, ultraviolet absorbing compounds (for example, Tinuvin - Registered Trade Mark) can be incorporated into the lamination adhesive to protect the electro-optic layer from ultraviolet exposure. Such incorporation of an ultraviolet absorber into the lamination adhesive may eliminate the need for an ultraviolet filter layer to be applied to the front protective layer of a display. Similarly, a diffusing layer can be created by incorporating a light-scattering or diffracting material (for example, glass beads) into the lamination adhesive, thus creating a display with a matte appearance.

Regardless of the exact method used to form the lamination adhesive with integral CFA, it is necessary to register the colored elements of the CFA with the pixel electrodes of the backplane. This can be accomplished by placing alignment marks on the CFA side during the printing process or creating such marks afterwards using an optical registration mechanism.

The present invention has the advantage that forming a color filter array in a lamination adhesive layer disposed between the electro-optic layer and the viewing surface of the display places the color filter array close to the electro-optic layer, thus minimizing parallax problems. The color filter array is also provided in a flexible polymer layer already present in the display. Alignment of the color filter array with the backplane electrodes is easily effected and, in the case of flexible displays, maintained as the display is flexed in use. The choice of material for the front protective and similar layers is expanded, since this layer does not need to be capable of incorporating or supporting a color filter array. Methods are available for patterning the color filter array at a variety of resolutions, depending upon performance and cost requirements. Some of these methods can be carried out on continuous webs of material and can create an inexpensive front plane laminate with an integral color filter array. Additional additives, such as ultraviolet absorbers, can be incorporated into the lamination adhesive layer, thus simplifying the requirements for other layers of the display. For certain applications requiring a single color, the use of a colored lamination adhesive is an inexpensive way to offer a wide variety of colors.

The question of providing ultraviolet absorbers (filters) in the displays of the present invention, and in similar electro-optic displays, especially thin flexible electro-optic displays, deserves further consideration, since a variety of types of electro-optic media are sensitive to ultraviolet radiation. There are three basic approaches to providing the necessary ultraviolet absorbing layer. In the first approach, an ultraviolet absorbing dye is incorporated into a polymeric layer which forms the protective layer (front substrate) of the display. In the second approach an ultraviolet absorbing material is coated as a separate layer on to one (or possibly both) surfaces of the front substrate. Such ultraviolet absorbing coatings are well known in the display industry and hence it is well within the level of skill in the art to provide such coatings on the polymeric films typically used as front substrates in the present displays. Since the surface of the front substrate facing the electro-optic layer will typically carry an ITO or similar electrode, it may be preferable to coat the ultraviolet absorber on the other (normally exposed) surface of the front substrate. In the third approach, the ultraviolet absorber is included in an adhesive layer. Incorporation of the absorber in the front adhesive layer has already been described. However, in many cases the front substrate used in the present displays may be a complex multilayer structure which needs to be assembled via at least one lamination operation using a lamination adhesive and it may be more convenient to include the ultraviolet absorber into the lamination adhesive used to assembly such a multi-layer front substrate.

As will readily be apparent to those skilled in the technology of electro-optic displays, the displays of the present invention, whether monochrome or colored, may incorporate any of the optional features of prior art electro-optic displays described in the aforementioned U.S. Patents Nos. 6,982,178 and 7,110,164 and Publication No. 2004/0155857. Thus, for example, the displays and inverted front plane laminates of the present invention may incorporate any of the various conductive vias, edge seals, protective layers and other optional features described in these published applications.

It has been found that the electro-optic performance of displays produced from the prior art FPL's and from the inverted FPL's of the present invention are similar, despite the fact that the latter displays have an additional layer (the lamination adhesive layer) between the electro-optic layer and the viewing surface of the display. The following Examples are given, though by way of illustration only to illustrate the various aspects of the present invention and the improvements in performance which can be achieved in displays of the present invention.

### Example 1 : Production of experimental displays

A slurry containing electrophoretic capsules in a polymeric binder was prepared substantially as described in U.S. Patent Publication No. 2002/0180687, Paragraphs [0067] to [0074], except that Dow Corning Q2-521 "Super Wetting Agent" was added as a coating aid. The slurry was then bar-coated on to the aluminum-coated surface of an aluminized PET release sheet. In one procedure, a 20 $\mu$m layer of a lamination adhesive had previously been coated on to the same aluminized surface; this lamination adhesive was of the type described in U.S. Patent No. 7,012,735, and was doped with 20,000 ppm of tetrabutylammonium hexafluorophosphate. In a second procedure, the same 20 $\mu$m layer of the same lamination adhesive was laminated to the ITO-covered surface of a PET/ITO release sheet, and the resultant sub-assembly laminated to the electrophoretic layer/release sheet subassembly, the adhesive layer being laminated to the electrophoretic layer.

The lamination adhesive used was known to give relatively good low temperature performance, but to give displays with poor room temperature resolution.

The two structures produced as described above were when used to make several different kinds of displays by three differing procedures, as follows:

1. The release layer covering the electrophoretic layer was removed, and the remaining layers (PET/ITO/lamination adhesive/electrophoretic layer) were laminated to a second layer of the same lamination adhesive on a further release sheet to give a substantially symmetrical structure with the electrophoretic layer disposed between two similar lamination adhesive layers. The further release sheet was then removed from the second lamination layer, and the remaining layers laminated to a 2 inch (51 mm) square carbon black coated backplane to give a functioning experimental single pixel electrophoretic display, designated "FPL1".

2. It was found that, with some care, the release layers on the double-release structure could be peeled from either side. If the release sheet covering the electrophoretic layer was removed, the remaining layers could (surprisingly) be laminated directly to ITO on a polymeric film to give a structure (designated "FPLnorm" identical to prior art, not inverted, FPL.

3. Alternatively, after removal of the release sheet covering the electrophoretic layer, the remaining layers could be laminated to a second layer of the same lamination adhesive on a further release sheet to give a second substantially symmetrical structure, differing from the symmetrical structure produced by Procedure 1 only in which side of the electrophoretic layer was smooth, the smooth surface being of course that adjacent the coating support. The release layers on either side of the resultant structure could be peeled and the remaining layers laminated to the ITO-covered surface of an ITO/PET film to give either one of two related front plane laminates, designated "FPL1' ", which was identical in structure to the aforementioned FPL1, and "FPL1" ", with the electrophoretic layer inverted relative to FPL1 and FPL 1'.

Each of FPLnorm, FPL1, FPL1' and FPL1" was laminated to a carbon backplane in the manner already described to give an experimental single pixel electrophoretic display. (Note that the surface of the carbon black backplane was sufficiently rough to preclude preparation of an inverted structure of the present invention with no lamination adhesive layer between the electrophoretic layer and the backplane.) Similar experimental displays were also produced using ITO-on-glass backplanes to allow testing of resolution as described in Example 3 below, but in this case a true inverted structure was provided since the ITO-on-glass backplane was sufficiently smooth to allow lamination of the electrophoretic layer with no intermediate lamination adhesive. All displays were incubated at 30 per cent relative humidity for 5 days before the electro-optic testing described in Example 2 below.

The Table below summarizes the structures produced on the carbon black backplanes; in this Table, "BP" denotes the backplane, "LA" a lamination adhesive layer and "ELP" the electrophoretic (capsule-containing) layer:

**Table**

| Code | Structure | Remarks |
|---|---|---|
| Control | BP/LA/ELP/ITO | Slurry coated on ITO, made into FPL |
| FPLnorm | BP/LA/ELP/ITO | Made from electrophoretic layer on release as described above |
| FPL1 | BP/LA/(smooth)ELP/LA/ITO; ITO lam 1st | Symmetrical structure, with smooth side of the electrophoretic layer toward backplane |
| FPL1' | BP/LA/(smooth)ELP/LA/ITO; Release lam 1st | Symmetrical structure, with smooth side of the electrophoretic layer toward backplane; differs in order of lamination from FPL1 |
| FPL1" | BP/LA/ELP(smooth)/LA/ITO; Release lam 1st | Symmetrical structure, viewed from rough electrophoretic layer side, made by lamination to adhesive on release, removing "rough" side release, and laminating to ITO/PET |

**Example 2 : Electro-optic tests**

The experimental displays prepared in Example 1 above were driven between their extreme black and white optical states using $\pm 15$ V, 500 millisecond drive pulses and the reflectivities of the two extreme optical states measured. Testing was effected both at room temperature (20°C) and at 0°C. Figure 4 of the accompanying drawings shows the dynamic range (the difference between the extreme black and white states measured in L* units (where L* has the usual CIE definition:

$$L* = 116(R/R_0)^{1/3} - 16,$$

where R is the reflectance and $R_0$ is a standard reflectance value). In each case, the left column shows the results obtained at 20°C, while the right column shows the results obtained at 0°C.

From Figure 4 it will be seen that the control and the "inverted" structure of the present invention (the two pairs of columns at the left-hand side of Figure 4, the inverted layer being inverted in the sense that the electrophoretic layer is inverted) show very similar results at both 20°C and 0°C. The symmetrical structures also show similar performance at 20°C but show poorer performance at the lower temperature because of the second layer of lamination adhesive.

Kickback or self-erasing (a movement of the optical state away from the extreme optical state following the end of the drive pulse) and dwell time dependency (the variation of one extreme optical state depending upon the period for which the pixel has remained in the opposite extreme optical state before the transition to the one extreme optical state) were similar for all the experimental displays.

**Example 3 : Resolution**

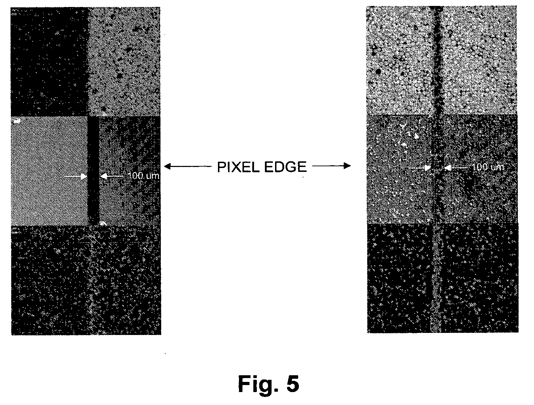

The resolution of the control displays and those of the present invention was evaluated by microscopic examination of the displays formed on glass backplanes; Figure 5 shows the differences that were observed. As indicated in Figure 5, each of the displays used in these tests comprised two pixels separated by a 100 $\mu$m gap having no ITO layer and hence non-switching. The control display (conventional FPL structure) is shown on the left-hand side of Figure 5 and the display of the present invention on the right-hand side. Each side of Figure 5 is a composite of three separate micrographs of the relevant display. The upper section of Figure 5 shows the display with the right pixel switched to its white extreme optical state, while the lower section of Figure 5 shows the display with the right pixel switched to its black extreme optical state.

It can be seen from Figure 5 that, in the control display, blooming caused switching across the entire width of the inter-pixel gap, i.e., the blooming is at least 100 $\mu$m. On the other hand, in the inverted FPL display of the present invention, blooming is less than one capsule width (less that 20 $\mu$m) and the inter-pixel gap is clearly visible in both the upper and lower portions of Figure 5.

These results illustrate the substantial advantage in resolution which can be achieved by using the inverted FPL structure of the present invention, while maintaining the low temperature electro-optic response of the display. Thus, the present invention allows both good room temperature resolution and good low temperature performance to be obtained from the same display, thus avoiding the compromise between these two performance parameters required in prior art displays.

**Claims**

**1.**   An electro-optic display (200, 300) comprising , in order:

a backplane (202) with pixel electrodes (203R, 203G, 203B);
a layer of a solid electro-optic medium (104); and
a front light-transmissive electrically-conductive electrode layer (108),
the display (200, 300) being **characterized in that** an adhesive layer comprising sections (206R, 206G, 206B) having differing colors is disposed between the layer of solid electro-optic medium (104) and the front light-transmissive electrically-conductive electrode layer (108), said sections (206R, 206G, 206B) being aligned with corresponding pixel electrodes (203R, 203G, 203B) of the backplane (202).

**2.**   An electro-optic display (200, 300) according to claim 1 wherein the adhesive layer has sections (206R, 206G, 206B) having at least three different colors.

**3.**   An electro-optic display (200, 300) according to claim 2 wherein the adhesive layer has yellow, cyan and magenta, or red, green and blue, or red, green, blue and clear sections.

**4.**   An electro-optic display (200, 300) according to claim 3 wherein the adhesive layer is colored using pigments.

**5.**   An electro-optic display (200, 300) according to claim 4 wherein the pigments have an average particle size in the range of 5 to 50 nm.

**6.**   An electro-optic display (200, 300) according to claim 1 wherein the adhesive layer comprises at least one of an ultra-violet absorber and a light-scattering or light-diffusing material.

**7.**   An electro-optic display (200, 300) according to claim 1 wherein the electro-optic medium (104) comprises an electrochromic or rotating bichromal member medium.

**8.**   An electro-optic display (200, 300) according to claim 1 wherein the electro-optic medium (104) comprises an electrophoretic medium having a plurality of electrically charged particles disposed in a fluid and capable of moving through the fluid on application of an electric field to the electro-optic medium.

**9.**   An electro-optic display (200, 300) according to claim 8 wherein the electrically charged particles and the fluid are encapsulated within a plurality of capsules or cells.

**10.**   An electro-optic display according to claim 8 wherein the electrically charged particles and the fluid are present as a plurality of discrete droplets held within a polymeric continuous phase.

11. An electro-optic display according to claim 8 in which the fluid is gaseous.

**Patentansprüche**

1. Elektrooptische Anzeige (200, 300), die in dieser Reihenfolge umfasst:

eine Rückwand (202) mit Pixelelektroden (203R, 203G, 203B);
eine Schicht aus einem festen elektrooptischen Medium (104); und
eine vordere lichtdurchlässige elektrisch leitende Elektrodenschicht (108),
wobei die Anzeige (200, 300) **dadurch gekennzeichnet ist, dass** eine Kleberschicht, die Bereiche (206R, 206G, 206B) mit unterschiedlichen Farben aufweist, zwischen der Schicht aus dem festen elektrooptischen Medium (104) und der vorderen lichtdurchlässigen elektrisch leitenden Elektrodenschicht (108) angeordnet ist, wobei die Bereiche (206R, 206G, 206B) mit entsprechenden Pixelelektroden (203R, 203G, 203B) der Rückplatte (202) ausgerichtet sind.

2. Elektrooptische Anzeige (200, 300) nach Anspruch 1, wobei die Kleberschicht Bereiche (206R, 206G, 206B) mit mindestens drei unterschiedlichen Farben aufweist.

3. Elektrooptische Anzeige (200, 300) nach Anspruch 2, wobei die Kleberschicht gelbe, cyanfarbene und magentafarbene oder rote, grüne und blaue oder rote, grüne, blaue und durchsichtige Bereiche aufweist.

4. Elektrooptische Anzeige (200, 300) nach Anspruch 3, wobei die Kleberschicht unter Verwendung von Pigmenten gefärbt ist.

5. Elektrooptische Anzeige (200, 300) nach Anspruch 4, wobei die Pigmente eine mittlere Partikelgröße im Bereich von 5 bis 50 nm aufweisen.

6. Elektrooptische Anzeige (200, 300) nach Anspruch 1, wobei die Kleberschicht mindestens eines eines Ultraviolett-Absorbers und eines lichtstreuenden oder lichtdiffundierenden Materials aufweist.

7. Elektrooptische Anzeige (200, 300) nach Anspruch 1, wobei das elektrooptische Medium (104) ein elektrochromes oder ein rotierendes bichromes Element-Medium aufweist.

8. Elektrooptische Anzeige (200, 300) nach Anspruch 1, wobei das elektrooptische Medium (104) ein elektrophoretisches Medium umfasst, das eine Vielzahl von elektrisch geladenen Partikeln aufweist, die in einem Fluid angeordnet sind und die in der Lage sind, sich bei Anlegen eines elektrischen Felds an das elektrooptische Medium durch das Fluid zu bewegen.

9. Elektrooptische Anzeige (200, 300) nach Anspruch 8, wobei die elektrisch geladenen Partikel und das Fluid in einer Vielzahl von Kapseln oder Zellen gekapselt sind.

10. Elektrooptische Anzeige nach Anspruch 8, wobei die elektrisch geladenen Partikel und das Fluid als Vielzahl von diskreten Tropfen vorhanden sind, die in einer polymeren kontinuierlichen Phase gehalten sind.

11. Elektrooptische Anzeige nach Anspruch 8, bei der das Fluid gasförmig ist.

**Revendications**

1. Ecran électro-optique (200, 300) comprenant, dans l'ordre :

un fond de panier (202) avec des électrodes de pixel (203R, 203G, 203B) ;
une couche de milieu électro-optique solide (104) ; et
une couche d'électrode avant électriquement conductrice transmettant la lumière (108),
l'écran (200, 300) étant **caractérisé en ce qu'**une couche adhésive comprenant des sections (206R, 206G, 206B) ayant des couleurs différentes est disposée entre la couche de milieu électro-optique solide (104) et la couche d'électrode avant électriquement conductrice transmettant la lumière (108), lesdites sections (206R, 206G, 206B) étant alignées avec des électrodes de pixel correspondantes (203R, 203G, 203B) du fond de panier (202) .

2.  Ecran électro-optique (200, 300) selon la revendication 1 dans lequel la couche adhésive a des sections (206R, 206G, 206B) ayant au moins trois couleurs différentes.

3.  Ecran électro-optique (200, 300) selon la revendication 2 dans lequel la couche adhésive a des sections jaunes, cyan et magenta, ou rouges, vertes et bleues, ou rouges, vertes, bleues et transparentes.

4.  Ecran électro-optique (200, 300) selon la revendication 3 dans lequel la couche adhésive est colorée à l'aide de pigments.

5.  Ecran électro-optique (200, 300) selon la revendication 4 dans lequel les pigments ont une taille moyenne de particules dans la gamme de 5 à 50 nm.

6.  Ecran électro-optique (200, 300) selon la revendication 1 dans lequel la couche adhésive comprend un absorbant ultraviolet et/ou un matériau dispersant la lumière ou diffusant la lumière.

7.  Ecran électro-optique (200, 300) selon la revendication 1 dans lequel le milieu électro-optique (104) comprend un milieu d'éléments électrochromes ou bichromes rotatifs.

8.  Ecran électro-optique (200, 300) selon la revendication 1 dans lequel le milieu électro-optique (104) comprend un milieu électrophorétique ayant une pluralité de particules électriquement chargées disposées dans un fluide et susceptibles de se déplacer à travers le fluide lors de l'application d'un champ électrique au milieu électro-optique.

9.  Ecran électro-optique (200, 300) selon la revendication 8 dans lequel les particules électriquement chargées et le fluide sont encapsulés à l'intérieur d'une pluralité de capsules ou cellules.

10. Ecran électro-optique selon la revendication 8 dans lequel les particules électriquement chargées et le fluide sont présents sous la forme d'une pluralité de gouttelettes discrètes maintenues à l'intérieur d'une phase polymère continue.

11. Ecran électro-optique selon la revendication 8 dans lequel le fluide est gazeux.

Fig. 1

200

PROTECTIVE LAYER — 110

FRONT ELECTRODE — 108

206G

206R

206B

ELECTRO-OPTIC LAYER — 104

203R

203G

203B

BACKPLANE — 202

**Fig. 2**

**Fig. 3**

**Fig. 4**

**Fig. 5**

## REFERENCES CITED IN THE DESCRIPTION

### Patent documents cited in the description

- US 6864875 B
- US 6982178 B
- US 7110164 B
- US 20050146774 A
- US 20020180687 A
- US 5808783 A
- US 5777782 A
- US 5760761 A
- US 6054071 A
- US 6055091 A
- US 6097531 A
- US 6128124 A
- US 6137467 A
- US 6147791 A
- US 6301038 B
- US 6870657 B
- US 6950220 B
- US 20050001810 A
- EP 1462847 A
- EP 1482354 A
- EP 1484635 A
- EP 1500971 A
- EP 1501194 A
- EP 1536271 A
- EP 1542067 A
- EP 1577702 A
- EP 1577703 A
- EP 1598694 A
- WO 2004090626 A
- WO 2004079442 A
- WO 2004001498 A
- US 5930026 A
- US 5961804 A
- US 6017584 A
- US 6067185 A
- US 6118426 A
- US 6120588 A
- US 6120839 A
- US 6124851 A
- US 6130773 A
- US 6130774 A
- US 6172798 B
- US 6177921 B
- US 6232950 B
- US 6249271 B
- US 6252564 B
- US 6262706 B
- US 6262833 B
- US 6300932 B
- US 6312304 B
- US 6312971 B
- US 6323989 B
- US 6327072 B
- US 6376828 B
- US 6377387 B
- US 6392785 B
- US 6392786 B
- US 6413790 B
- US 6422687 B
- US 6445374 B
- US 6445489 B
- US 6459418 B
- US 6473072 B
- US 6480182 B
- US 6498114 B
- US 6504524 B
- US 6506438 B
- US 6512354 B
- US 6515649 B
- US 6518949 B
- US 6521489 B
- US 6531997 B
- US 6535197 B
- US 6538801 B
- US 6545291 B
- US 6580545 B
- US 6639578 B
- US 6652075 B
- US 6657772 B
- US 6664944 B
- US 6680725 B
- US 6683333 B
- US 6704133 B
- US 6710540 B
- US 6721083 B
- US 6724519 B
- US 6727881 B
- US 6738050 B
- US 6750473 B
- US 6753999 B
- US 6816147 B
- US 6819471 B
- US 6822782 B
- US 6825068 B
- US 6825829 B
- US 6825970 B
- US 6831769 B

- US 6839158 B
- US 6842167 B
- US 6842279 B
- US 6842657 B
- US 6865010 B
- US 6866760 B
- US 6870661 B
- US 6900851 B
- US 6922276 B
- US 6950200 B
- US 6958848 B
- US 6967640 B
- US 6987603 B
- US 6995550 B
- US 7002728 B
- US 7012600 B
- US 7012735 B
- US 7023430 B
- US 7030412 B
- US 7030854 B
- US 7034783 B
- US 7038655 B
- US 7061663 B
- US 7071913 B
- US 7075502 B
- US 7075703 B
- US 7079305 B
- US 7106296 B
- US 7109968 B
- US 7110163 B
- US 7116318 B
- US 7116466 B
- US 7119759 B
- US 7119772 B
- US 20020060321 A
- US 20020090980 A
- US 20030011560 A
- US 20030102858 A
- US 20030151702 A
- US 20030222315 A
- US 20040014265 A
- US 20040075634 A
- US 20040094422 A
- US 20040105036 A
- US 20040112750 A
- US 20040119681 A
- US 20040136048 A
- US 20040155857 A
- US 20040180476 A
- US 20040190114 A
- US 20040196215 A
- US 20040226820 A
- US 20040239614 A
- US 20040257635 A
- US 20040263947 A
- US 20050000813 A
- US 20050007336 A
- US 20050012980 A
- US 20050017944 A
- US 20050018273 A
- US 20050024353 A
- US 20050062714 A
- US 20050067656 A
- US 20050078099 A
- US 20050099672 A
- US 20050122284 A
- US 20050122306 A
- US 20050122563 A
- US 20050122565 A
- US 20050134554 A
- US 20050151709 A
- US 20050152018 A
- US 20050152022 A
- US 20050156340 A
- US 20050168799 A
- US 20050179642 A
- US 20050190137 A
- US 20050212747 A
- US 20050213191 A
- US 20050219184 A
- US 20050253777 A
- US 20050270261 A
- US 20050280626 A
- US 20060007527 A
- US 20060024437 A
- US 20060038772 A
- US 20060139308 A
- US 20060139310 A
- US 20060139311 A
- US 20060176267 A
- US 20060181492 A
- US 20060181504 A
- US 20060194619 A
- US 20060197736 A
- US 20060197737 A
- US 20060197738 A
- US 20060198014 A
- US 20060202949 A
- US 20060209388 A
- WO 0038000 A
- WO 0036560 A
- WO 0067110 A
- WO 0107961 A
- EP 1099207 B1
- EP 1145072 B1
- US 5872552 A
- US 6144361 A
- US 6271823 B
- US 6225971 B
- US 6184856 B
- US 4418346 A
- WO 0201281 A
- US 20020075556 A
- US 20050168801 A
- US 20050105159 A

- US 20050007653 A

- JP H0980400 A

**Non-patent literature cited in the description**

- **O'REGAN, B. et al.** *Nature,* 1991, vol. 353, 737
- **WOOD, D.** *Information Display,* March 2002, vol. 18 (3), 24
- **BACH, U. et al.** *Adv. Mater.,* 2002, vol. 14 (11), 845

- **KITAMURA, T. et al.** Electrical toner movement for electronic paper-like display. *IDW Japan,* 2001
- **YAMAGUCHI, Y. et al.** Toner display using insulative particles charged triboelectrically. *IDW Japan,* 2001